# EUROPEAN PATENT SPECIFICATION

(11) **EP 1 795 338 B1**
(45) Date of publication and mention of the grant of the patent: **11.08.2010**
(21) Application number: 05425872.8
(22) Date of filing: 07.12.2005
(51) Int. Cl.: B32B 19/02, B32B 5/18, B32B 27/40, E04F 13/08, E04F 13/14

(54) **Composite material coated panel for use in the building and furnishing sector**
Mit Kompositmaterial beschichtetes Panel zur Verwendung in der Bau- und Installationsbranche
Panneau recouvert d'un matériau composite pour le secteur de la construction et de l'ameublement

(43) Date of publication of application: 13.06.2007
(73) Proprietor: Biagetti, Roberto, 20149 Milano (IT); Biagetti, Marco, 20149 Milano (IT)
(72) Inventor: Biagetti, Roberto, 20149 Milano (IT); Biagetti, Marco, 20149 Milano (IT)
(74) Representative: Arena, Giovanni

(56) References cited:
- EP-A- 0 197 324
- WO-A-2005/014285
- FR-A- 2 415 698
- GB-A- 1 386 752
- US-A- 3 679 529
- US-B1- 6 460 306
- US-B1- 6 886 304

## Description

The present invention refers to a composite material plated panel for possible use in the building and furnishing sector.

### STATE OF THE ART

The use of natural stone to prepare furnishing objects or wall panelling plates in the building and furnishing sector is known. A drawback resulting from the use of massive natural stone plates is represented by their weight, so that panels made of a thin stone material plate coating a cellular aluminium layer or a layer of steel plates with a cellular internal polystyrene filling structure are used in their place.

These panels, however, while of much lower weight than natural stone panels of equal thickness, have the drawback of considerably raising costs, because of their rather sophisticated manufacturing process.

The use of coating panels as a substitute of natural stone, being made of a composite material based on granite and/or quartz and/or glass granules tied by a resin binder (polyester or epoxy resin) is also known. Said plates, put on the market in sizes of 120 x 300 (or submultiples thereof) and with a thickness of about 6 mm., are normally utilised in the furnishing sector, as a coating for laminates, wooden shelves or boards, pavements, walls etc., to which they are affixed by gluing at the time of their installation.

Further prior art is described in the documents GB1386752, EP0197324 and US6460306.

GB1386752 concerns an ornamental building panel comprising first and second layers of resinous material containing mineral particles adhered together and a rigid block of foamed material, e.g. of polyurethane or glass, encased between the first and second layers. The resinous material of the second layer extends through a plurality of openings present in the block of foamed material, forming bridging connections between the layers to prevent their separation.

EP0197324 concerns a panel used for floorings, worktops for kitchens or the like. The panel has a middle substrate arranged between two outer layers which consist of a plurality of paper sheets impregnated with a thermoset plastic. At least one of the outer layers is provided with a protective layer of a curable synthetic resin, the abrasion value being improved considerably by adding abrasion inhibitors. An embodiment example exibits a groove and a feather on two opposite sites of the panel, which have the function of consenting more panels to be joined together in order to realize a flooring.

US6460306 concerns a disengageable interconnecting flooring system for use in forming a temporary or permanent flooring surface on top of a support structure from individual flooring panels. The system includes two or more flooring panels comprising a top wear surface and a bottom surface for contact with the support structure. The panels have edges with recesses formed therein. The system further comprises a connector having a base and a projection extending vertically from the base shaped to be received in a disengageable vertical connected fashion into the recesses of the panels.

### SCOPE OF THE INVENTION

The principal scope of the present invention is to realise a composite material coated panel for use in the building sector, having the following advantages over the products of the prior art:
- compared with the panels coated with natural stone plates, the new panel, while still presenting a rather limited weight and a coating substantially equivalent to that of natural stone, essentially turns out to have a considerably lower cost, in the order of 50%,
- compared with the manufactured items currently achieved with the mentioned composite material coated plates, the new panel allows achieving manufactured items, such as external coatings, of a considerably lower cost.

### ABSTRACT OF THE INVENTION

The panel for use in the building and furnishing sector according to the invention is characterised for this purpose in that it consists of an internal layer of foamed polyurethane, coated on a side with a composite material plate made of granite and/or quartz and/or glass granules tied by a resin binder, and coated on its opposite side by a plate similar to the former or made of a cement-like, wooden or metallic material. The panel is fitted on two opposite edges with a groove carved out of the foamed polyurethane material and covered with a metallic or PVC foil, so as to allow the panel to engage, by anchoring brackets of the panel itself, to the face of a building.

### DRAWINGS

The characteristics of the invention will become clearer from the description to follow, referring to examples of embodiments of an exemplifying yet not limiting nature, made with reference to the enclosed drawings whose figures show:
Fig. 1A and Fig. 1B: views in a compact and exploded form of a cross section of the panel according to the invention;
Fig. 2 and 3: a panel according to the invention, used for preparing coatings for building faces;

### PREFERRED EXAMPLES OF EMBODIMENT

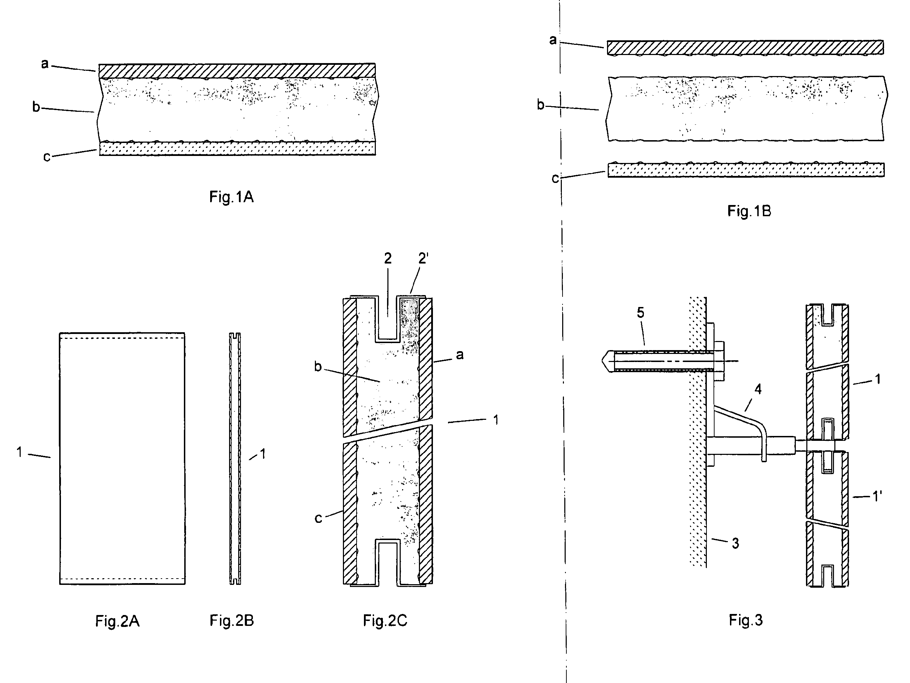

Fig. 1A and Fig. 1B respectively show an assembled and exploded view of a panel cross section according to the invention, in its most general form of embodiment. According to this most general form of embodiment, the panel is composed of an internal layer "b" made of foamed polyurethane, coated on one side by a plate "a" (of a known kind) of a composite material based on granite and/or quartz and/or glass granules tied by a resin binder, and coated on the other side by a plate "c" similar to the foregoing plate "a", or by a cement-like, wooden or metallic layer "c".

The plate "a" presents, as already mentioned, a thickness of about 6 mm, the plate "c" may have a variable thickness but preferably equal to that of plate "a", while the thickness of the internal layer "b" may vary depending on the usage destination of the panel. The panel's overall thickness may in any case vary from a minimum of 40 mm to a maximum of 200 mm.

The panel format may be of different sizes, but it is preferably made of a length of 3 m and a width of 1.2 m.

The panel's manufacturing process turns out to be rather simple and economical. It envisions the use of a mould of a shape identical to that of the panel to be achieved, an insertion of the two plates "a" and "c" into the mould to back up its two largest surfaces, and an injection of polyurethane foam into the cavity between the two plates. In order to ensure a good adhesion of the polyurethane on the internal surface of plate "a", a pre-treatment of the surface itself is not required, as even in the absence of a pre-treatment, after the polyurethane has solidified, the force of adhesion (detaching strength) of the polyurethane on said surface proves to be adequately high.

The advantageous characteristics of the mentioned panel can be summarised as follows:
- a rather limited specific weight (a weight of about 20 N/m2, if the plate "c" is also made of a composite material),
- a good resistance to mechanical and thermal stresses and against ageing,
- good sound absorption and thermal insulating properties,
- easy workability, handling, storage and transport,
- limited cost.

The Figures 2 and 3 refer to the possibility of utilising the panel to achieve external faces of buildings. In this case both plates "a" and "c" are made of the mentioned composite material, have a thickness of about 6 mm, and a length and width selected in accordance with the project's requirements. The internal layer "b" presents on the other hand a thickness of about 28 mm. Figure 2a shows a front view of this panel (designated with the number 1), Figure 2b a vertical cross-sectional view, and Figure 2c an enlarged cross-sectional view of the panel's upper and lower edges. In order to allow installing a panel on a face by using the appropriate brackets supplied to provide a so-called "ventilated" structure (brackets already on the market, used for installing the mentioned panels of the known art, whereof that shown by 4 in Fig. 3 is an example), each panel is fitted along its upper and lower edge with a rectangular groove 2 (also known as a "kerf" in technical language) carved out of the intermediate layer "b" and covered with a PVC or metal foil 2' extending outward from the groove, until it covers the full upper and lower surface of layer "b".

The Figure 3 shows the modalities of installing the panel 1 on a face 3. The panel is in fact anchored to the face 3 through the brackets 4 attached to the face by screws with expansion dowels 5 engaging with the grooves of the two adjacent panels 1 and 1' by means of special tailpieces inserted into the grooves themselves.

As regards the function served by the foil 2', its purpose is two-fold. It actually serves both as a diffuser of the forces exerted by said tailpieces within the panel grooves, as well as a means of protection against potential infiltration (this protection from infiltration proves to be necessary at the edges of the panels destined to be installed in a horizontal direction, but is not needed at the panels destined for vertical installation).

## Claims

1. Panel for use in the building sector and in particular for realisation of ventilated facades, **characterised in that** it consists of an internal layer (b) made of foamed polyurethane, coated on a side with a plate (a) made of a composite material based on granite and/or quartz and/or glass granules tied together by resin, and coated on its opposite side with a panel (c) similar to the previous one or made of a cement-like, wooden or metallic material,
and further **characterised in that** it is fitted on two opposite edges with a groove (2) carved out of the foamed polyurethane material and covered with a metallic or PVC foil (2'), so as to allow the panel to engage, by anchoring brackets of the panel itself, to the face of a building.

2. Panel according to claim 1, **characterised in that** it said foil (2') extends outward from the groove (2) carved out of the foamed polyurethane layer, until it covers the full surface of said layer on the sides of the groove.

## Patentansprüche

1. Panel zur Verwendung in der Baubranche und insbesondere zur Realisierung von belüfteten Fassaden, **dadurch gekennzeichnet, dass** es aus einer innenliegenden Schicht (b) aus geschäumten Polyurethan besteht, die auf einer Seite mit einer aus einem Kompositmaterial gebildeten Platte (a) beschichtet ist, das auf miteinander durch Harz verbundene Granit- und/oder Quartz- und/oder Glass-Körnchen basiert, und die auf ihrer gegenüberliegenden Seite mit einer Platte (c) ähnlich der ersten oder mit einem zementähnlichen, hölzernen oder metallischen Material beschichtet ist, und weiterhin **dadurch gekennzeichnet, dass** es an zwei gegenüberliegenden Kanten mit einer Fuge (2) versehen ist, die aus dem geschäumten Polyurethan herausgeschnitten ist und die mit einer metallischen oder PVC Folie (2') abgedeckt ist, um es dem Panel zu ermöglichen, durch Halteanker des Panel selbst mit der Fläche eines Gebäudes zu kontaktieren.

2. Panel gemäß Anspruch 1,
**dadurch gekennzeichnet,**
**dass** sich die besagte Folie (2') soweit außerhalb der in die geschäumten Polyurethanschicht geschnittenen Fuge (2) erstreckt, bis sie die gesamte Oberfläche der besagten Schicht auf den Seiten der Fuge bedeckt.

## Revendications

1. Panneau pour une utilisation dans le secteur de la construction, et en particulier pour la réalisation de façades ventilées, **caractérisé en ce qu'**il consiste en une couche intérieure (b) faite de mousse polyuréthane, revêtu sur un coté d'une plaque (a) faite d'un matériau composite à base de granules de granit et/ou de quartz et/ou de verre liés ensemble par une résine, et revêtu sur son coté opposé d'une plaque (c) similaire à la plaque précédente ou faite d'un matériau de type ciment, de bois ou d'un matériau métallique,
et **caractérisé en outre en ce qu'**il comprend, sur deux bords opposés, une rainure (2) découpée dans la mousse polyuréthane et recouverte d'une feuille (2') métallique ou en PVC, pour permettre au panneau de venir en prise, par des supports d'ancrage du panneau lui-même, avec la façade d'un bâtiment.

2. Panneau selon revendication 1, **caractérisé en ce que** ladite feuille (2') s'étend au dehors de la rainure (2) découpée dans la couche de mousse polyuréthane, jusqu'à ce qu'elle couvre la surface totale de ladite couche sur les cotés de la rainure.
